# EUROPÄISCHE PATENTSCHRIFT

(11) **EP 3 256 357 B1**
(45) Veröffentlichungstag und Bekanntmachung des Hinweises auf die Patenterteilung: **10.04.2019**
(21) Anmeldenummer: 16703777.9
(22) Anmeldetag: 09.02.2016
(51) Int. Cl.: B60T 15/52, B60T 8/34

(54) **BETRIEBSBREMSEINRICHTUNG MIT SCHNELLENTLÜFTUNGSVENTIL**
SERVICE BRAKE ARRANGEMENT WITH QUICK RELEASE VALVE
ARRANGEMENT DE FREIN DE SERVICE AVEC SOUPAPE À RELACHEMENT RAPIDE

(30) Priorität: 13.02.2015 DE 102015102127
(43) Veröffentlichungstag der Anmeldung: 20.12.2017
(73) Patentinhaber: KNORR-BREMSE Systeme für Nutzfahrzeuge GmbH, 80809 München (DE)
(72) Erfinder: HECKER, Falk, 71706 Markgröningen (DE); HERGES, Michael, 80935 München (DE); WIEDER, Gerhard, 74354 Besigheim (DE); LANQUETOT, Jacques, 14360 Trouville/Mer (FR); BOEHLER, Vincent, 14100 Saint Desir (FR)
(86) Internationale Anmeldenummer: PCT/EP2016/052749
(87) Internationale Veröffentlichungsnummer: WO 2016/128416

(56) Entgegenhaltungen:
- DE-A1-102013 000 275
- US-A- 2 718 897
- US-A- 3 981 545
- US-A1- 2007 029 873

## Beschreibung

Die Erfindung betrifft eine Betriebsbremseinrichtung für Fahrzeuge, beinhaltend wenigstens einen druckluftbetätigten Betriebsbremszylinder mit wenigstens einem Kolben und/oder einer Membrane, welcher und/oder welche einerseits eine Druckkammer begrenzt, die zum Zuspannen der Betriebsbremse mit Druckluft beaufschlagbar und zum Lösen von der Druckluft entlastbar ist, und andererseits eine Federkammer begrenzt, die den Kolben und/oder die Membrane in die Lösestellung der Betriebsbremse vorspannende Federmittel aufnimmt, wobei die Druckkammer über einen Druckanschluss verfügt, der von einer Bremsleitung be- und entlüftbar ist, gemäß dem Oberbegriff von Anspruch 1.

Solche Betriebsbremseinrichtungen weisen meist eine ABS-Regelung auf. Ziel einer Bremsschlupfregelung (Anti-Blockier-System, ABS) ist, einen an Rädern auftretenden Bremsschlupf auf einen optimalen Schlupf einzuregeln bzw. zu begrenzen. Ein optimaler Bremsschlupf beträgt beispielsweise 12%. Der Bremsschlupf wird durch Vergleich der Radgeschwindigkeit des betreffenden Rades mit einer zentralen Referenzgeschwindigkeit bestimmt. Hierzu kann die ABS-Regelung den Bremsdruck in den Bremszylindern ausgehend von einem dem jeweiligen Bremswunsch entsprechenden Niveau senken (Drucksenken), halten (Druckhalten) und wieder auf das dem Bremswunsch entsprechende Ausgangsniveau steigern (Drucksteigern).

Beim einer z.B. aus DE 10 2013 000 275 A1 bekannten Betriebsbremsvorrichtung sind aktive pneumatische Betriebsbremszylinder in Membran- und/oder Kolbenausführung vorhanden, die wiederum über in den Bremsleitungen angeordnete ABS-Drucksteuerventile mit Druckluft beaufschlagt werden. Bei allen Be- oder Entlüftungsvorgängen muss die Druckluft über die ABS-Drucksteuerventile geleitet werden, was abhängig vom Druckverhältnis relativ langsam vonstatten geht. In elektronisch (bremsdruck)geregelten Bremssystemen (EBS) werden die Bremszylinder durch Druckregelmodule be- oder entlüftet werden, welche den Bremsdruck in den Bremsleitungen auch im Rahmen der Bremsschlupfregelung (ABS) steuern. In DE 10 2013 000 275 A1 ist zwischen dem Betriebsbremsventil und den ABS-Drucksteuerventilen der Vorderachse ein Schnelllöseventil angeordnet. Dieses Schnelllöseventil spricht auf ein schnelles Lösen des Bremspedals durch den Fahrer an und sorgt dann für eine schnelle Entlüftung der Bremsleitungen. Eine gattungsbildende Betriebsbremseinrichtung ist in US 3 981 545 A offenbart.

Im Falle einer Vollbremsung mit ABS-Regelung spielt der Druckabbaugradient beim Drucksenken eine große Rolle für die Regelgüte und damit auch für den Bremsweg. Wünschenswert beim Drucksenken im Rahmen eines ABS-Regeleingriffs ist ein möglichst hoher Druckabbaugradient mit schneller Druckentlastung der Bremszylinder.

Der Erfindung liegt demgegenüber die Aufgabe zugrunde, eine Betriebsbremsvorrichtung der eingangs erwähnten Art derart fortzubilden, dass eine möglichst schnelle Druckentlastung der Bremszylinder möglich ist. Diese schnelle Druckentlastung soll insbesondere im Falle eines ABS-Regeleingriffs möglich sein.

Diese Aufgabe wird erfindungsgemäß durch die Merkmale von Anspruch 1 gelöst.

### Offenbarung der Erfindung

Die Erfindung basiert auf dem Gedanken, dass ein von dem in der Bremsleitung herrschenden Druck gesteuertes Schnellentlüftungsventil, welches mit seinem ersten Anschluss an die Bremsleitung, mit seinem zweiten Anschluss an den Druckanschluss des Betriebsbremszylinders und mit seinem dritten Anschluss an die Federkammer des Betriebsbremszylinders angeschlossen ist, und welches ausgebildet ist, dass es aufgrund von einem in der Bremsleitung bewirkten Drucksenken den ersten Anschluss absperrt und den zweiten Anschluss mit dem dritten Anschluss verbindet.

Unter einem "in der Bremsleitung bewirkten Drucksenken" soll ein Absenken des Drucks in Bezug zu einem dort zuvor herrschenden Druck verstanden werden.

Folglich ist der abgesenkte Druck kleiner als der in der Bremsleitung zuvor herrschende Druck.

Dann wird bei einer insbesondere durch eine ABS-Regelung initiierten Drucksenkphase der Druck in der Bremsleitung beispielsweise durch ein dem Betriebsbremszylinder vorgeordnetes ABS-Drucksteuerventil abgesenkt und dieser abgesenkte Druck in den ersten Anschluss des Schnellentlüftungsventils eingesteuert, woraufhin dieses eine Verbindung zwischen seinem zweiten und dritten Anschluss schafft, wodurch die Druckkammer und die Federkammer des Betriebsbremszylinders miteinander verbunden werden. Der erste Anschluss des Schnellentlüftungsventils wird dabei bevorzugt abgesperrt. Dadurch strömt Druckluft, die noch unter dem kurz vor der Drucksenkphase höheren Druck einer Druckhalte- oder Drucksteigerungsphase steht von der Druckkammer in die Federkammer und führt auf der Rückseite des Kolbens bzw. der Membrane zu einer Lösekraft, die zusätzlich zu den Federkräften der Federmittel wirkt, die den Kolben bzw. die Membrane in Lösestellung vorspannen bzw. bringen. Diese zusätzliche Lösekraft sorgt dann für ein schnelleres Lösen des Bremszylinders bzw. der Betriebsbremse wie es insbesondere im Rahmen einer Drucksenkphase bei einer ABS-Regelung vorteilhaft ist. Insbesondere kann dadurch bei der ABS-Regelung der sog. erste Radeinbruch deutlich verringert werden.

Dann muss Druckluft in schnellen Drucksenkphasen, wie sie z.B. im Rahmen einer ABS-Regelung vorkommen, nicht mehr wie in DE 10 2013 000 275 A1 über eine lange pneumatische Bremsleitung bis zu einem entfernt vom Bremszylinder angeordneten Schnellentlüftungsventil bzw. bis zum ABS-Drucksteuerventil bzw. bis zum Druckregelmodul geleitet werden, um dann erst dort entlüftet zu werden, was eine gewisse Zeit erfordert. Wenn das Schnellentlüftungsventil hingegen bevorzugt direkt und unmittelbar am Betriebsbremszylinder angeordnet wird, ist der Entlüftungs- bzw. Strömungsweg der Druckluft von der Druckkammer in die Federkammer des Betriebsbremszylinders sehr kurz, da beide Kammern dicht nebeneinander liegen.

Vorteilhaft ist insbesondere auch, dass ein einfaches und handelsübliches Schnelllöseventil völlig ausreichend ist, um die oben beschriebenen Funktionen auszuführen. Es muss mithin kein Schnellentlüftungsventil speziell für die erfindungsgemäße Betriebsbremsvorrichtung angefertigt werden. Dies hilft, Herstellkosten zu sparen. Der erste Anschluss des Schnellentlüftungsventils stellt dann gewissermaßen einen Steueranschluss des Schnellentlüftungsventils dar, welches (auch) abhängig von dem an dem ersten Anschluss anstehenden Druck seinen ersten Anschluss mit seinem zweiten Anschluss oder seinen zweiten Anschluss mit seinem dritten Anschluss verbindet.

Durch die in den Unteransprüchen aufgeführten Maßnahmen sind vorteilhafte Weiterbildungen und Verbesserungen der in Anspruch 1 angegebenen Erfindung möglich.

Besonders bevorzugt weist die Betriebsbremseinrichtung eine ABS-Regelung auf, wobei der in der Bremsleitung herrschende Druck im Falle einer aktivierten ABS-Regelung von der ABS-Regelung gesteuert wird. Besonders bevorzugt ist dann in der Bremsleitung dem Schnellentlüftungsventil ein ABS-Drucksteuerventil oder ein Druckregelmodul mit ABS-Funktionalität vorgeordnet, welches das Drucksenken in der Bremsleitung im Rahmen der ABS-Regelung bewirkt. Mit anderen Worten gibt dann das ABS-Drucksteuerventil oder das Druckregelmodul den Steuerdruck am ersten Anschluss des Schnellentlüftungsventils im Rahmen der ABS-Regelung vor.

Alternativ kann der Druck in der Bremsleitung und am ersten Anschluss des Schnellentlüftungsventils auch ohne Vorliegen eines ABS bzw. ohne einen ABS-Regeleingriff abhängig von der jeweiligen Bremsanforderung durch den Fahrer oder durch ein Fahrerassistenzsystem vorgegeben werden. Dann kann die Betriebsbremsvorrichtung durch das Schnellentlüftungsventil sehr schnell auf eine Rücknahme einer Bremsanforderung reagieren, was gerade im Hinblick auf die Regelungsgüte von Fahrdynamikregelsystemen vorteilhaft ist, die dann beispielsweise den Druck in der Bremsleitung (zeitweise) vorgeben.

Besonders bevorzugt ist das Schnellentlüftungsventil ausgebildet, dass es aufgrund eines in der Bremsleitung bewirkten Druckhaltens oder Drucksteigerns im Rahmen der ABS-Regelung den ersten Anschluss mit dem zweiten Anschluss verbindet und den dritten Anschluss absperrt. Diese Eigenschaft weist bereits das oben beschriebene Schnellentlüftungsventil des Stands der Technik auf, so dass ein solches auch für die bevorzugte Weiterbildung einsetzbar ist. Für das Druckhalten oder Drucksteigern stellt dabei wie bereits oben erläutert der zeitlich zuvor oder zuletzt eingenommene Druckwert in der Bremsleitung den Maßstab dar.

Der in der Bremsleitung herrschende Druck, der das Schnellentlüftungsventil am ersten Anschluss (mit)steuert, wird daher bevorzugt im Falle einer aktivierten und vorhandenen ABS-Regelung von einer ABS-Regelung gesteuert. Mit anderen Worten werden dann von der ABS-Regelung Phasen des Druckhaltens, des Drucksenkens und des Drucksteigerns zyklisch generiert, die dann einen entsprechenden Druck in der Bremsleitung erzeugen, der dann das Schnellentlüftungsventil (mit)steuert.

Das Schnellentlüftungsventil weist ein bewegliches Ventilschließglied auf, welches eingerichtet ist, (auch) abhängig von dem am ersten Anschluss anstehenden Druck den ersten Anschluss zu verschließen und dabei den zweiten Anschluss mit dem dritten Anschluss zu verbinden oder den dritten Anschluss zu verschließen und dabei den ersten Anschluss mit dem zweiten Anschluss zu verbinden. Bei dem hier verwendeten Schnellentlüftungsventil handelt es sich vorzugsweise um ein handelsübliches Schnellentlüftungsventil, das hier aus Kostengründen bevorzugt eingesetzt wird.

Wie oben bereits ausgeführt, das ist Schnellentlüftungsventil direkt und unmittelbar an dem Betriebsbremszylinder angeordnet und an diesem befestigt. Dadurch ergibt sich ein sehr kurzer Strömungsweg zwischen der Druckkammer und der Federkammer des Betriebsbremszylinders, was sich vorteilhaft auf die Reaktionsgeschwindigkeit auf eine Rücknahme einer Bremsanforderung und insbesondere auf die Regelgüte einer ABS-Regelung auswirkt.

Insbesondere kann es sich bei der Betriebsbremseinrichtung um eine pneumatische Betriebsbremseinrichtung insbesondere mit zusätzlicher ABS-Funktion oder um eine elektropneumatische Betriebsbremseinrichtung wie z.B. ein elektronisch geregeltes Bremssystem handeln, bei dem der Bremsdruck z.B. mittels eines oder mehrerer Druckregelmodule an wenigstens einer Achse geregelt wird.

Gemäß einer Fortbildung ist ein Rückschlagventil vorgesehen, über welches die Federkammer gegenüber der Atmosphäre entlüftbar ist, beispielsweise in Form eines Flatterventils. Dabei können über die Größe des Strömungsquerschnitts und die Federrate der Federmittel des Rückschlagventils der Staudruck und somit die Kräfteverhältnisse an der Membrane bzw. am Kolben des Betriebsbremszylinders beeinflusst werden. Das Rückschlagventil verhindert vorteilhaft ein Eindringen von Schmutz und Feuchtigkeit von außen, weil es eine Strömung in Gegenrichtung, d.h. von der Atmosphäre in die Federkammer verhindert. Das Rückschlagventil baut beispielsweise Druck in der Federkammer ab, wenn sich deren Volumen in Zuspannstellung verkleinert und dadurch die in ihr befindliche Luft komprimiert wird. Dies kann auch dann der Fall sein, wenn der Betriebsbremszylinder mit einem Federspeicherbremszylinder zu einem Kombizylinder kombiniert ist und lediglich der Federspeicherbremszylinder zugespannt wird. Dann drückt die Federspeicherbremskolbenstange die Membrane bzw. den Kolben des Betriebsbremszylinders ebenfalls in die Zuspannstellung.

Der genaue Aufbau der erfindungsgemäßen Betriebsbremseinrichtung wird durch die nachfolgende Beschreibung eines Ausführungsbeispiels deutlich.

### Zeichnung

In der Zeichnung zeigt
- Fig.1: eine Schnittdarstellung eines Schnellentlüftungsventils gemäß dem Stand der Technik;
- Fig.2: einen schematischen Schaltplan eines Betriebsbremszylinders, an welchem ein Schnellentlüftungsventil nach Fig.1 gemäß einer bevorzugten Ausführungsform der Erfindung angeordnet ist;
- Fig.3: eine konkrete konstruktive Ausführung von Fig.2.

### Beschreibung des Ausführungsbeispiels

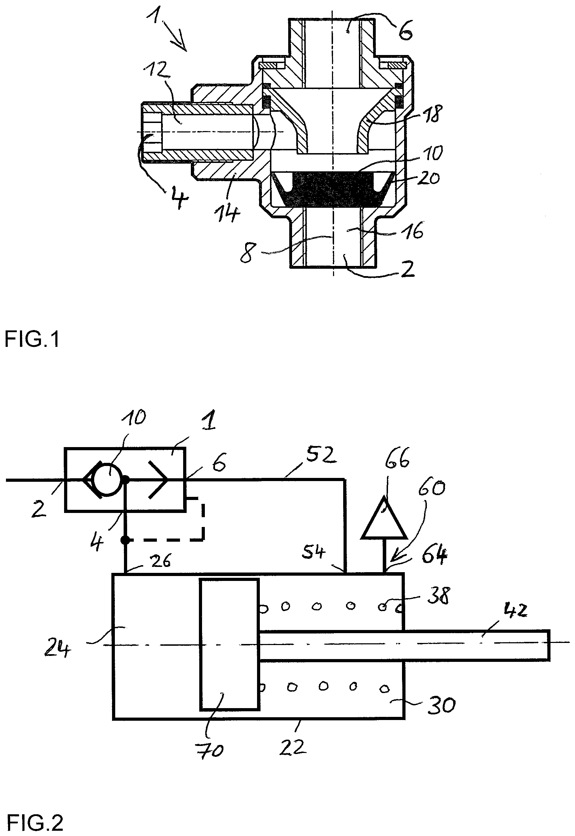

In Fig.1 zeigt ein pneumatisch gesteuertes Schnellentlüftungsventil 1 gemäß dem Stand der Technik in Schnittdarstellung. Das Schnellentlüftungsventil 1 hat einen ersten Anschluss 2, einen zweiten Anschluss 4 und einen dritten Anschluss 6, wobei der erste Anschluss 2 einen Steueranschluss zum Einsteuern eines pneumatischen Steuerdrucks darstellt. Der erste Anschluss 2 und der dritte Anschluss 6 sind beispielsweise koaxial in Bezug zu einer Mittelachse 8 angeordnet, längs welcher ein Ventilschließglied 10 axial beweglich ist. Die Achse des zweiten Anschlusses 4 steht bevorzugt senkrecht zur Mittelachse 8. Der zweite Anschluss 4 mündet in einen Kanal 12 im Inneren eines Ventilgehäuses 14, welcher in senkrechter Richtung gesehen mit einem weiteren Kanal 16 in Strömungsverbindung steht, welcher koaxial mit der Mittelachse 8 ist. In dem weiteren Kanal 16 ist ein sich in einer Richtung vom ersten Anschluss 2 zum dritten Anschluss 6 hin erweiternder Rohrstutzen 18 aufgenommen. Alle drei Anschlüsse 2, 4 und 6 sind rohrstutzenartig ausgebildet, um fittings für pneumatische Leitungen anschließen bzw. um in Anschlüsse von pneumatischen Geräten hineinragen zu können.

Das Ventilschließglied 10 ist beispielsweise zylindrisch und kappenförmig ausgebildet und weist an seinem radial äußeren Rand elastische Lippen 20 auf, welche sich entlang einer Innenwandung des weiteren Kanals 16 im Ventilgehäuse 14 bewegen können. Beispielsweise besteht das vorzugsweise einstückige Ventilschließglied 10 aus einem Elastomer. Der Rohrstutzen 18 weist einen zylindrischen Anfangsabschnitt auf, an welchem das Ventilschließglied 10 wie an einem Ventilsitz dichtend anschlagen und dadurch den dritten Anschluss 6 verschließen kann.

In der in den Figuren 1 bis 3 gezeigten Stellung des Ventilschließglieds 10 verschließt dieses den ersten Anschluss 2. In dieser ersten Schaltstellung des Ventilschließglieds 10, welche durch einen geringen Druck am ersten Anschluss 2 eingenommen wird, stehen daher der zweite Anschluss 4 und der dritte Anschluss 6 miteinander in Strömungsverbindung. Wenn aufgrund eines Druckaufbaus am ersten Anschluss 2 das Ventilschließglied 10 entlang der Mittelachse 8 in Richtung auf den Rohrstutzen 18 gedrängt wird und an diesen dichtend anschlägt, wird gemäß einer zweiten Schaltstellung der dritte Anschluss 6 verschlossen und eine Strömungsverbindung zwischen dem ersten Anschluss 2 und dem zweiten Anschluss 4 hergestellt. Der Rohrstutzen 18 bildet demnach einen Ventilsitz für das Ventilschließglied 10.

Die elastischen Lippen 20 des Ventilschließglieds 10 werden unter entsprechend hohem Druck am ersten Anschluss 2 umgebogen, so dass eine Verbindung zwischen dem ersten Anschluss 2 und dem zweiten Anschluss 4 sowie dem dritten Anschluss 6 möglich ist, auch wenn sich das Ventilschließglied 10 in einer Position nahe dem oder am ersten Anschluss 2 befindet. Der Aufbau und die Funktionsweise eines solchen Schnellentlüftungsventils 1 sind hinreichend bekannt. Deshalb soll hier nicht weiter darauf eingegangen werden.

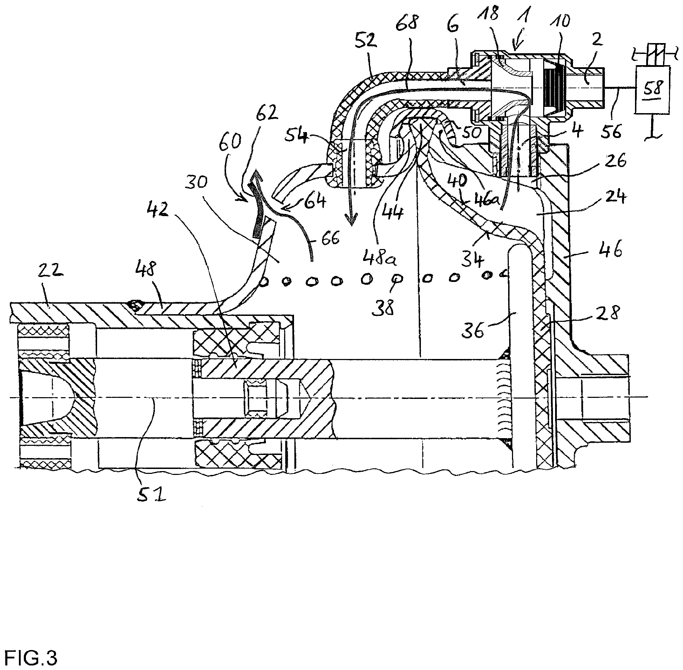

Die Figuren 2 und 3 zeigen nun den Einsatz eines solchen Schnellentlüftungsventils 1 an einem pneumatischen Betriebsbremszylinder 22 einer pneumatischen oder elektropneumatischen Betriebsbremseinrichtung. Der Betriebsbremszylinder 22 ist zwar separat dargestellt, er kann aber auch mit einem hier nicht gezeigten Federspeicherbremszylinder zu einem sog. Kombizylinder baulich und funktionell verbunden sein.

Der Betriebsbremszylinder 22 weist eine Druckkammer 24 auf, in welche sich ein erster Einlass 26 erstreckt, über welchen zum Betätigen des Betriebsbremszylinders 22 Druckluft eingelassen und abgelassen wird. Die Druckluft wirkt auf eine innerhalb des Betriebsbremszylinders 22 eingesetzte Membrane 28 ein, welche sich mit ihrer in eine Federkammer 30 weisenden ersten Seite 34 an einem Druckstück in Form eines steifen Membrantellers 36 abstützt. Genauer trennt die Membrane 28 die mit Druckluft be- und entlastbare Druckkammer 24 des Betriebsbremszylinders 22 von der Federkammer 30, welche eine am Membranteller 36 und am Boden des Betriebsbremszylinders 22 abgestützte Rückholfeder 38 aufnimmt. Die Membrane 28 weist dabei eine zweite zur Druckkammer 24 weisende Seite 40 auf.

Der Membranteller 36 ist mit einer Druckstange 42 verbunden, die mit einem Bremsbetätigungsmechanismus außerhalb des Betriebsbremszylinders 22 zusammenwirkt. Hierbei kann es sich beispielsweise um Betätigungselemente einer Scheibenbremse eines Kraftfahrzeugs, insbesondere eines schweren Nutzfahrzeugs handeln. Der Betriebsbremszylinder 22 ist ein aktiver Bremszylinder, d.h. dass die Betriebsbremse durch Belüften der Druckkammer 24 zugespannt und durch Entlüften gelöst wird. Die sich einerseits am Membranteller 36 und andererseits am Boden des Betriebsbremszylinders 22 abstützende Rückholfeder 38 sorgt dafür, dass die Druckstange 42 bei entlüfteter Druckkammer 24 in die Lösestellung zurückgeholt wird (Position gemäß Fig.3). Andererseits wird die Rückholfeder 38 komprimiert, wenn die Druckkammer 24 belüftet wird und dadurch die Membrane 28 zusammen mit dem Membranteller 36 in die Zuspannstellung (in Fig.3 nach links) verschoben wird.

Ein radial äußerer Befestigungsrand 44 der Membrane 28 weist einen keilförmigen, sich nach radial innen hin verjüngenden Querschnitt auf. Dieser radial äußere Befestigungsrand 44 der Membrane mit dem keilförmigen, sich nach radial innen verjüngenden Querschnitt ist in eine komplementär geformte Aufnahme mit keilförmigem, sich nach radial außen erweiternden Querschnitt zwischen einem ersten Gehäuseteil 46 und einem zweiten Gehäuseteil 48 des Betriebsbremszylinders 22 geklemmt. Das erste Gehäuseteil 46 begrenzt die Druckkammer 24 und das zweite Gehäuseteil 48 die Federkammer 30 des Betriebsbremszylinders 22, wobei deren zueinander weisende Ränder als nach radial außen abgebogene Flansche 46a, 48a ausgebildet sind, deren gegeneinander weisende Innenflächen die Aufnahme mit keilförmigem Querschnitt zwischen sich ausbilden. Eine die Flansche 46a, 48a von außen übergreifendes und umlaufendes Spannband 50 hält die beiden Gehäuseteile 46, 48 zusammen, wobei der Befestigungsrand 44 der Membrane in der Aufnahme geklemmt wird. Ein freier, zentraler Teil der elastischen Membrane 28 kann sich dann in Richtung der Mittelachse 51 des Betriebsbremszylinders 22 zwischen der Lösestellung und der Zuspannstellung begrenzt bewegen.

Unmittelbar und direkt an dem Ventilgehäuse 14 des Betriebsbremszylinders 22 ist nun ein Schnelllöseventil 1 wie in Fig.1 gezeigt angebracht. Dabei ragt der rohrstutzenförmige zweite Anschluss 4 direkt in den ersten Einlass 26 der Druckkammer 24 hinein. Der dritte Anschluss 6 steht über eine kurze pneumatische Leitung 52 mit einem zweiten Einlass 54 der Federkammer 30 in Verbindung. Der erste Anschluss 2 steht über eine Bremsleitung 56 mit einem beispielsweise entfernt von dem Betriebsbremszylinder 22 angeordneten ABS-Drucksteuerventil 58 in Verbindung. Ein solches ABS-Drucksteuerventil 58 ist hinlänglich bekannt und enthält eine Einlass-/Auslassventil-Kombination, wobei das Einlassventil geöffnet den Bremsdruck durchsteuert und geschlossen absperrt. Das geöffnete Auslassventil entlüftet den im vorgeordneten Teil der Bremsleitung anstehenden Bremsdruck in die Atmosphäre.

Da die Betriebsbremsvorrichtung im vorliegenden Fall bevorzugt eine pneumatische Betriebsbremsvorrichtung mit ABS-Regelung und mit zwei pneumatischen Kanälen (Vorderachskanal und Hinterachskanal) ist, erfolgt die Bremsschlupfregelung in bekannter Weise mit Hilfe von ABS-Drucksteuerventilen 58, die den vom jeweiligen Kanal eines Betriebsbremsventils ausgesteuerten Bremsdruck abhängig von einer Abweichung eines Ist-Bremsschlupfs von einem Soll-Bremsschlupf steuern. Hierzu sind die ABS-Drucksteuerventile 58 ausgebildet, dass sie den von dem jeweiligen Kanal des Betriebsbremsventils ausgesteuerten Bremsdruck unverändert bis zum ersten Anschluss 2 durchsteuern (Drucksteigern), halten, d.h. gegenüber dem ersten Anschluss 2 absperren (Druckhalten) oder senken (Drucksenken). Damit werden die im Rahmen eines typischen Zyklus einer ABS-Regelung durchlaufenen Phasen Druckhalten, Drucksenken und Drucksteigern hier mittels der ABS-Drucksteuerventile 58 gesteuert, wobei dann im ABS-Eingriffsfall ein entsprechender Steuerdruck am ersten Anschluss 2 des Schnellentlüftungsventils 1 ansteht und das Schnellentlüftungsventil 1 steuert. Dabei ist hier beispielsweise jedem mit Hilfe eines Betriebsbremszylinder 22 gebremsten Rad ein eigenes ABS-Drucksteuerventil 58 zugeordnet. Denkbar ist jedoch auch z.B. im Falle einer Select-Low oder Select-High-ABS-Regelung, dass allen Rädern bzw. Betriebsbremszylindern 22 an einer Achse nur ein einziges ABS-Drucksteuerventil 58 zugeordnet ist.

Alternativ zu ABS-Drucksteuerventilen 58 könnte die ABS-Regelung auch mit Hilfe von hier nicht gezeigten Druckregelmoduln erfolgen, welche jeweils über eine Einlass-/Auslassventilkombination, ein Backup-Ventil, ein Relaisventil, einen Drucksensor sowie über eine lokales elektronisches Steuergerät verfügen, wobei ein solches Druckregelmodul priorisiert elektrisch gesteuert wird. In diesem Fall ist die Betriebsbremsvorrichtung elektro-pneumatisch und besteht beispielsweise in einem elektronisch geregelten Bremssystem (EBS) mit Bremsdruckregelung. Die ABS-Routinen sind dabei teilweise in das elektronische Steuergerät eines solchen Druckregelmoduls integriert, wobei dann das Druckregelmodul im ABS-Eingriffsfall, d.h. bei übermäßigem Bremsschlupf einen dem jeweils vorliegenden übermäßigen Bremsschlupf (mit oder ohne ABS-Eingriff) entsprechenden Zyklus von Drücken in den ersten Anschluss 2 einsteuert.

Insgesamt ist daher das am Betriebsbremszylinder 22 direkt angeordnete Schnellentlüftungsventil 1 dem zugeordneten ABS-Drucksteuerventil 58 und dem hier nicht gezeigten Betriebsbremsventil nachgeordnet. Mit anderen Worten ist das ABS-Drucksteuerventil 58 dem Schnellentlüftungsventil 1 und dem Betriebsbremsventil zwischengeordnet. Im Falle einer elektro-pneumatischen Betriebsbremsvorrichtung ist das Schnellentlüftungsventil 1 dem Druckregelmodul nachgeordnet.

Es ist anhand von Fig.1 leicht vorstellbar, dass das Schaltverhalten des Schnellentlüftungsventils 1 nicht nur abhängig von dem am ersten Anschluss 2 anstehenden Druck ist, sondern auch von den Drücken, wie sie jeweils am zweiten Anschluss 4 und am dritten Anschluss 6 anstehen, da diese Drücke ebenfalls auf das Ventilschließglied 10 jeweils in entgegen gesetzter Richtung wirken.

Die Federkammer 30 steht beispielsweise über ein Rückschlagventil 60 z.B. in Form eines Flatterventils mit der Atmosphäre in Verbindung. Das Rückschlagventil 60 lässt eine Druckluftströmung in Richtung von der Federkammer 30 in die Atmosphäre zu, sperrt aber in Gegenrichtung. Das Flatterventil beinhaltet wenigstens ein federbelastetes und/oder elastisches Element 62, das gegen eine Durchgangsöffnung 64 im zweiten Gehäuseteil 48 des Betriebsbremszylinders 22 gespannt ist, um diese dichtend zu verschließen. Wenn der Druck in der Federkammer 30 einen vorbestimmten Grenzdruck überschreitet, so öffnet das Rückschlagventil 60 dadurch, dass das elastische Element 62 vom Rand der Durchgangsöffnung 64 abhebt und nach außen gebogen wird, wodurch eine Strömungsverbindung zwischen der Federkammer 30 und der Atmosphäre geschaffen wird und Druckluft aus der Federkammer 30 nach außen strömt. Diese Situation ist in Fig.3 gezeigt und durch einen ersten Pfeil 66 symbolisiert.

Wenn kein ABS-Regeleingriff erfolgt, so schaltet das ABS-Drucksteuerventil 58 den vom entsprechenden Kanal des Betriebsbremsventils ausgesteuerten Bremsdruck unverändert an den ersten Anschluss 2 durch. Da dieser Bremsdruck in der Regel größer als der Atmosphärendruck ist, der im Lösezustand in der Federkammer 30 herrscht, ist der Druck am ersten Anschluss 2 größer als am dritten Anschluss 6 oder auch am zweiten Anschluss 4, an dem der vor dem Bremsvorgang noch niedrigere Druck in der Druckkammer 24 ansteht, so dass das Ventilschließglied 10 gegen den Rohrstutzen 18 als Ventilsitz geschoben wird und den dritten Anschluss 6 verschließt. Dann wird eine Verbindung zwischen dem ersten Anschluss 2 und dem zweiten Anschluss 4 hergestellt, wodurch der Bremsdruck in die Druckkammer 24 gelangt und die zweite Seite 40 der Membrane 28 belastet. Da der Druck in der Federkammer 30 geringer als der Druck in der Druckkammer 24 ist, bewegt sich der zentrale Teil der Membrane 28 zusammen mit dem Membranteller 36 und der Druckstange 42 gegen die Wirkung der Rückholfeder 38 in Zuspannstellung, wodurch die Betriebsbremse zugespannt wird. Da dabei der dritte Anschluss 6 durch das Ventilschließglied 10 verschlossen ist, kann der am ersten Anschluss 2 anstehende Bremsdruck nicht in die Federkammer 30 gelangen. Überschüssiger Druck in der sich dann in Bezug auf ihr Volumen verkleinernden Federkammer 30 wird über das Rückschlagventil 60 abgebaut, wie durch den ersten Pfeil 66 in Fig.3 veranschaulicht wird.

Während einer Drucksenkphase innerhalb eines ABS-Regelungszyklus entlüftet das ABS-Drucksteuerventil 58 kurzzeitig den ihm vom Betriebsbremsventil zugeführten Bremsdruck in die Atmosphäre. Dann sinkt der Steuerdruck am ersten Anschluss 2 des Schnellentlüftungsventils 1, wobei der von der vorangehenden Druckhalte- oder Drucksteigerungsphase noch hohe Bremsdruck in der Druckkammer 24 bzw. am zweiten Anschluss 4 dafür sorgt, dass das Ventilschließglied 10 weg vom Rohrstutzen 18 in Richtung auf den ersten Anschluss 2 verschoben wird. Diese Situation ist in den Figuren 2 und 3 gezeigt. Dann geraten der zweite Anschluss 4 und der dritte Anschluss 6 in Strömungsverbindung, wodurch die noch unter hohem Bremsdruck stehende Druckluft in der Druckkammer 24 von dieser über die Leitung 52 und den zweiten Einlass 54 in die Federkammer 30 strömt, wie durch den zweiten Pfeil 68 in Fig.3 veranschaulicht wird. Diese in die Federkammer 30 eingeströmte Druckluft erzeugt auf der ersten Seite 34 der Membrane 28 eine Druckkraft, welche den zentralen Teil der Membrane 28 in die in Fig.3 gezeigte Lösestellung nach rechts drängt. Diese Druckkraft wird von der Kraft der Rückholfeder 38 unterstützt. Dadurch gelangt der Betriebsbremszylinder 22 während einer Drucksenkphase innerhalb eines ABS-Regelzyklus sehr schnell in Lösestellung.

Wenn dann im Rahmen des ABS-Zyklus der Drucksenkphase eine Drucksteigerungsphase folgt, so schaltet das ABS-Drucksteuerventil 58 den vom Fahrer oder von einem elektronischen Fahrerassistenzsystem vorgegebenen Bremsdruck wieder auf den ersten Anschluss 2 durch, woraufhin das Ventilschließglied 10 wiederum wie oben beschrieben den dritten Anschluss 6 verschließt und die Strömungsverbindung zwischen dem ersten Anschluss 2 und dem zweiten Anschluss 4 freigibt, damit die Druckkammer 24 belüftet und der Betriebsbremszylinder 22 dadurch wieder in Zuspannstellung gelangen kann.

Anstatt einer Membrane 28 mit Membranteller 36 kann auch ein starrer Kolben 70 die Federkammer 30 von der Druckkammer 24 trennen und als Betätigungselement des Betriebsbremszylinders 22 dienen, was in Fig.2 dargestellt ist. Das Schnellentlüftungsventil 1 ist dann in identischer Weise am Betriebsbremszylinder 22 angeordnet bzw. verschaltet.

Es ist weiterhin klar, dass der Druck in der Bremsleitung 56, welcher letztlich (auch) das Schnellentlüftungsventil 1 steuert, nicht nur durch eine ABS-Regelung gesteuert werden sondern auch durch eine entsprechende Bremsanforderung durch den Fahrer oder ein Fahrerassistenzsystem generiert werden kann, ohne dass ein ABS-Regeleingriff erfolgt oder ohne dass überhaupt eine ABS-Regelung vorhanden ist. Der Druck in der Bremsleitung 56, der am ersten Anschluss 2 das Schnellentlüftungsventil 1 (mit)steuert wird dann abhängig von der jeweiligen Bremsanforderung durch den Fahrer, d.h. von einem Betriebsbremsventil oder von einem Fahrerassistenzsystem automatisch erzeugt. Wesentlich für die rein pneumatische Steuerung des unmittelbar am Betriebsbremszylinder 22 angeordneten Schnellentlüftungsventils 1 bzw. von dessen Schaltstellungen sind daher die Drücke an dessen drei Anschlüssen 2, 4 und 6, wobei insbesondere der Druck am ersten Anschluss 2 von verschiedenen Quellen (z.B. ABS, Fahrerbremsanforderung, Fahrerassistenzsystem) erzeugt werden kann.

### Bezugszahlenliste

- 1: Schnellentlüftungsventil
- 2: erster Anschluss
- 4: zweiter Anschluss
- 6: dritter Anschluss
- 8: Mittelachse
- 10: Ventilschließglied
- 12: Kanal
- 14: Ventilgehäuse
- 16: weiterer Kanal
- 18: Rohrstutzen
- 20: Lippen
- 22: Betriebsbremszylinder
- 24: Druckkammer
- 26: erster Einlass
- 28: Membrane
- 30: Federkammer
- 34: erste Seite
- 36: Membranteller
- 38: Rückholfeder
- 40: zweite Seite
- 42: Druckstange
- 44: Befestigungsrand
- 46: erstes Gehäuseteil
- 46a: Flansch
- 48: zweites Gehäuseteil
- 48a: Flansch
- 50: Spannband
- 51: Mittelachse
- 52: Leitung
- 54: zweiter Einlass
- 56: Bremsleitung
- 58: ABS-Drucksteuerventil
- 60: Rückschlagventil
- 62: elastisches Element
- 64: Durchgangsöffnung
- 66: erster Pfeil
- 68: zweiter Pfeil
- 70: Kolben

## Patentansprüche

1. Betriebsbremseinrichtung für Fahrzeuge, beinhaltend wenigstens einen druckluftbetätigten Betriebsbremszylinder (22) mit wenigstens einem Kolben (70) und/oder einer Membrane (28), welcher und/oder welche
a) einerseits eine Druckkammer (24) begrenzt, die zum Zuspannen der Betriebsbremse mit Druckluft beaufschlagbar und zum Lösen von der Druckluft entlastbar ist, und
b) andererseits eine Federkammer (30) begrenzt, die den Kolben (70) und/oder die Membrane (28) in die Lösestellung der Betriebsbremse vorspannende Federmittel (38) aufnimmt, wobei
c) die Druckkammer (24) über einen Druckanschluss (26) verfügt, der von einer Bremsleitung (56) be- und entlüftbar ist, **gekennzeichnet durch**
d) ein von dem in der Bremsleitung (56) herrschenden Druck gesteuertes Schnellentlüftungsventil (1), welches mit seinem ersten Anschluss (2) an die Bremsleitung (56), mit seinem zweiten Anschluss (4) an den Druckanschluss (26) des Betriebsbremszylinders (22) und mit seinem dritten Anschluss (6) an die Federkammer (30) des Betriebsbremszylinders (22) angeschlossen ist, und
e) welches derart ausgebildet ist, dass es aufgrund von einem in der Bremsleitung (56) bewirkten Drucksenken den zweiten Anschluss (4) mit dem dritten Anschluss (6) verbindet.

2. Betriebsbremseinrichtung nach Anspruch 1, **dadurch gekennzeichnet, dass** sie eine ABS-Regelung aufweist, wobei der in der Bremsleitung (56) herrschende Druck im Falle einer aktivierten ABS-Regelung von der ABS-Regelung gesteuert wird.

3. Betriebsbremseinrichtung nach Anspruch 2, **dadurch gekennzeichnet, dass** in der Bremsleitung (56) dem Schnellentlüftungsventil (1) ein ABS-Drucksteuerventil (58) oder ein Druckregelmodul vorgeordnet ist, welches im Rahmen der ABS-Regelung das Drucksenken in der Bremsleitung (56) bewirkt.

4. Betriebsbremseinrichtung nach Anspruch 2 und 3, **dadurch gekennzeichnet, dass** das Schnellentlüftungsventil (1) derart ausgebildet ist, dass es aufgrund eines in der Bremsleitung (56) bewirkten Druckhaltens oder Drucksteigerns im Rahmen der ABS-Regelung den ersten Anschluss (2) mit dem zweiten Anschluss (4) verbindet und den dritten Anschluss (6) absperrt.

5. Betriebsbremseinrichtung nach einem der vorhergehenden Ansprüche, **dadurch gekennzeichnet, dass** das Schnellentlüftungsventil (1) ein bewegliches Ventilschließglied (10) aufweist, welches eingerichtet ist, abhängig von dem am ersten Anschluss (2) anstehenden Druck den ersten Anschluss (2) zu verschließen und dabei den zweiten Anschluss (4) mit dem dritten Anschluss (6) zu verbinden oder den dritten Anschluss (6) zu verschließen und dabei den ersten Anschluss (2) mit dem zweiten Anschluss (4) zu verbinden.

6. Betriebsbremseinrichtung nach einem der vorhergehenden Ansprüche, **dadurch gekennzeichnet, dass** das Schnellentlüftungsventil (1) unmittelbar und direkt an dem Betriebsbremszylinder (22) angeordnet ist.

7. Betriebsbremseinrichtung nach einem der vorhergehenden Ansprüche, **dadurch gekennzeichnet, dass** sie eine pneumatische oder eine elektropneumatische Betriebsbremseinrichtung ist.

8. Betriebsbremseinrichtung nach einem der vorhergehenden Ansprüche, **dadurch gekennzeichnet, dass** ein Rückschlagventil (60) vorgesehen ist, über welches die Federkammer (30) gegenüber der Atmosphäre entlüftbar ist.

## Claims

1. Service brake device for vehicles, including at least one compressed air-actuated service brake cylinder (22) with at least one piston (70) and/or a diaphragm (28), which
a) on the one hand delimit/s a pressure chamber (24), which for applying the service brake can be supplied with compressed air and for releasing can be purged of the compressed air, and
b) on the other hand delimits a spring chamber (30), which accommodates spring means (38) preloading the piston (70) and/or the diaphragm (28) into the release position of the service brake, wherein
c) the pressure chamber (24) comprises a pressure connection (26), which can be charged and purged by a brake line (56), **characterised by**
d) a quick air release valve (1) controlled by the pressure that is present in the brake line (56), which is connected with its first connection (2) to the brake line (56), with its second connection (4) to the pressure connection (26) of the service brake cylinder (22) and with its third connection (6) to the spring chamber (30) of the service brake cylinder (22), and
e) which is designed such that it connects the second connection (4) to the third connection (6) because of a pressure lowering brought about in the brake line (56).

2. Service brake device according to claim 1, **characterised in that** it has an ABS control, wherein the pressure that is present in the brake line (56) is controlled by the ABS control in the case of an activated ABS control.

3. Service brake device according to claim 2, **characterised in that** in the brake line (56) an ABS pressure control valve (58) or a pressure regulation module is arranged upstream of the quick air release valve (1), which as part of the ABS control brings about the pressure lowering in the brake line (56).

4. Service brake device according to claims 2 and 3, **characterised in that** the quick air release valve (1) is designed such that, because of a pressure holding or pressure increasing brought about in the brake line (56) as part of the ABS control, said quick air release valve connects the first connection (2) to the second connection (4) and shuts off the third connection (6).

5. Service brake device according to any of the preceding claims, **characterised in that** the quick air release valve (1) has a moveable valve closing member (10), which is equipped in order to close the first connection (2) as a function of the pressure that is present at the first connection (2) and in the process to connect the second connection (4) to the third connection (6) or to close the third connection (6) and in the process connect the first connection (2) to the second connection (4).

6. Service brake device according to any of the preceding claims, **characterised in that** the quick air release valve (1) is arranged immediately and directly on the service brake cylinder (22).

7. Service brake device according to any of the preceding claims, **characterised in that** it is a pneumatic or an electropneumatic service brake device.

8. Service brake device according to any of the preceding claims, **characterised in that** a non-return valve (60) is provided, via which the spring chamber (30) can be purged relative to the atmosphere.

## Revendications

1. Dispositif de frein de service pour des véhicules, comportant au moins un cylindre (22) de frein de service à actionnement par l'air comprimé ayant au moins un piston (70) et/ou une membrane (28), qui
a) délimite, d'une part, une chambre (24) sous pression, qui, pour serrer le frein de service, peut être alimentée en air comprimé et, pour le desserrage, peut être vidée de l'air comprimé et
b) délimite, d'autre part, une chambre (30) à ressort, qui reçoit des moyens (38) à ressort mettant le piston (70) et/ou la membrane (28) sous précontrainte dans la position de desserrage du frein de service, dans lequel
c) la chambre (24) sous pression dispose d'un raccord (26) sous pression, qui peut être alimenté en air et purgé par une ligne (56) de frein, **caractérisé par**
d) une soupape (1) de purge rapide, qui est commandée par la pression régnant dans la ligne (56) de frein et qui, par son premier raccord (2), est raccordée à la ligne (56) de frein, par son deuxième raccord (4), au raccord (26) de pression du cylindre (22) de frein de service et, par son troisième raccord (6), à la chambre (30) à ressort du cylindre (22) de frein de service et
e) qui est constituée de manière à relier, en raison d'un puits de pression provoqué dans la ligne (56) de frein, le deuxième raccord (4) au troisième raccord (6).

2. Dispositif de frein de service suivant la revendication 1, **caractérisé en ce qu'**il a une régulation ABS, dans lequel la pression régnant dans la ligne (56) de frein est, dans le cas où une régulation ABS est activée, commandée par la régulation ABS.

3. Dispositif de frein de service suivant la revendication 2, **caractérisé en ce que**, dans la ligne (56) de frein, est montée, en amont de la soupape (1) de purge rapide, une soupape (58) de commande de pression ABS ou un module de réglage de pression, qui, dans le cadre de la régulation ABS, donne le puits de pression dans la ligne (56) de frein.

4. Dispositif de frein de service suivant la revendication 2 et 3, **caractérisé en ce que** la soupape de purge rapide est constituée de manière à, sur la base d'un maintien de la pression ou d'une augmentation de la pression provoquée dans la ligne (56) de pression, relier, dans le cadre de la régulation ABS, le premier raccord (2) au deuxième raccord (4) et obturer le troisième raccord (6).

5. Dispositif de frein de service suivant l'une des revendications précédentes, **caractérisé en ce que** la soupape (1) de purge rapide a un obturateur (10) mobile conçu pour, en fonction de la pression régnant au premier raccord (1), obturer le premier raccord (2) et relier ainsi le deuxième raccord (4) au troisième raccord (6) ou obturer le troisième raccord (6) et ainsi relier le premier raccord (2) au deuxième raccord (4).

6. Dispositif de frein de service suivant l'une des revendications précédentes, **caractérisé en ce que** la soupape (1) de purge rapide est montée immédiatement et directement sur le cylindre (22) de frein de service.

7. Dispositif de frein de service suivant l'une des revendications précédentes, **caractérisé en ce que** c'est un dispositif de frein de service pneumatique ou électropneumatique.

8. Dispositif de frein de service suivant l'une des revendications précédentes, **caractérisé en ce qu'**il est prévu un clapet (60) antiretour, par lequel la chambre (30) à ressort peut être purgée par rapport à l'atmosphère.
